# EUROPÄISCHE PATENTSCHRIFT

(11) **EP 0 594 216 B1**
(45) Veröffentlichungstag und Bekanntmachung des Hinweises auf die Patenterteilung: **29.01.1997**
(21) Anmeldenummer: 93117195.3
(22) Anmeldetag: 22.10.1993
(51) Int. Cl.: B01D 46/26, B01D 46/42, B01D 46/00

(54) **Filtergerät für ein gasförmiges Medium**
Filtering device for a gaseous medium
Installation de filtrage pour un milieu gazeux

(30) Priorität: 22.10.1992 DE 4235701
(43) Veröffentlichungstag der Anmeldung: 27.04.1994
(73) Patentinhaber: KALTENBACH & VOIGT GMBH & CO., D-88400 Biberach (DE)
(72) Erfinder: Buchmann, Siegfried, D-88319 Aitrach (DE)
(74) Vertreter: Schmidt-Evers, Jürgen, Dipl.-Ing.

(56) Entgegenhaltungen:
- EP-A- 0 389 045
- US-A- 3 931 016

## Beschreibung

Die Erfindung bezieht sich auf ein Filtergerät nach dem Oberbegriff des Anspruchs 1.

Ein Filter wird in seinem Betrieb vom Filtergut zwangsläufig zugesetzt, wobei das Filtergut sich im wesentlichen auf der Oberfläche des Filters absetzt und dort geringfügig in die Oberflächenschicht eindringen kann. Durch diese Belegung mit Filtergut wird der Filter immer undurchlässiger und schließlich unbrauchbar, so daß er ausgetauscht oder von dem Filtergut gereinigt werden muß.

In der DE-33 40 161 A 1 ist ein Absauggerät für gewerbliche oder industrielle Zwecke beschrieben, das einen topfförmigen Sammelbehälter zur Aufnahme des Sauggutes aufweist, auf dem eine Baueinheit angeordnet ist, die aus einer Abdeckhaube und einem darin angeordneten Saugaggregat besteht. Bei diesem Absauggerät ist ein Filter an der Unterseite der Absaughaube vorgesehen, der sich somit im oberen Bereich des Sammelbehälters befindet. Die Zuführung der Saugluft erfolgt durch ein Zuführungsrohr direkt in den Sammelbehälter unterhalb des Filters. Die Absaughaube ist innenseitig mit einer Schalldämmung versehen, um die vom Saugaggregat ausgehenden Arbeitsgeräusche zu dämpfen.

In der DE-OS 24 01 116 ist ein Filtergerät mit einem Filter im Gehäuse beschrieben, der in einer Haltevorrichtung gehalten und mittels dieser durch einen Antrieb drehbar im Gehäuse gelagert ist. Der Filter ist mit einer eine Perforation bzw. Öffnung aufweisenden Hohlwelle und einer Lochhülse als Filterpatrone ausgebildet, wobei der Filter zwischen der perforierten Hohlwelle und der Lochhülse als sogenannter gepackter Filter angeordnet ist. Die so gebildete Filterpatrone läßt sich durch eine Öffnung im Gehäuse ausbauen, die durch einen Deckel verschließbar ist.

Im Filterbetrieb strömt das zu filternde, verunreinigte Medium in das Gehäuse ein, es durchströmt die Lochhülse, den Filter und die perforierte Hohlwelle, und es tritt am Auslaß wieder aus dem Gehäuse aus. Ein Reinigen des Filters soll durch Drehen des Filters mittels der Haltevorrichtung möglich sein, wobei das Filtergut durch Schleuderwirkung von der Wandfläche der Filterpatrone entfernt werden soll.

Es sei dahingestellt, inwieweit dieses bekannte Filtergerät zur Filterung von Flüssigkeiten geeignet ist. Der Einsatz dieses bekannten Filtergerätes für ein gasförmiges Medium erscheint aus mehreren Gründen problematisch und nachteilig zu sein. Zum einen dürfte das auf den Boden des Gehäuses fallende Filtergut nur mit großem Aufwand aus dem Gehäuse zu entfernen sein. Zum anderen ist sowohl das Filtern als auch Abreinigen von festen bzw. staubförmigen Teilchen mittels eines von einer Lochhülse umgebenden Filters problematisch, insbesondere im Hinblick auf die Abreinigung durch Schleuderwirkung. Ferner ist der Strömungsdurchgang durch den Filter aufgrund des Vorhandenseins der Lochhülse und der perforierten Hohlwelle, auf der der Filter flächig sitzt, problematisch, weil sowohl die Lochhülse als auch die perforierte Hohlwelle den Strömungsdurchgang wesentlich beeinträchtigen.

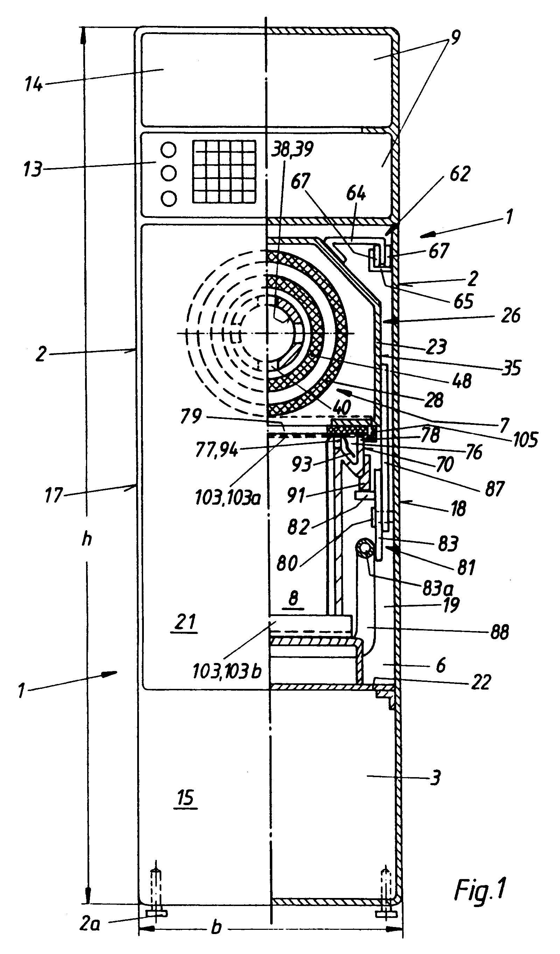

In der US-PS 3 931 016 ist ein Filtergerät mit einem Gehäuse beschrieben, in dem ein Trommelfilter um seine Mittelachse durch einen Antrieb drehbar in einem Strömungsweg für das zu filternde gasförmige Medium gelagert ist. Die Filtertrommel weist ein axiales Loch auf, mit dessen Wandung sie auf einer vom Abtrieb antreibbaren Welle sitzt. Die Filtertrommel ist fest mit einer Luftpumpe in Form eines Ventilators verbunden, die auf der Welle fest angeordnet ist und gleichzeitig mit der Filtertrommel gedreht wird. Im Filterbetrieb ergibt sich ein aus Fig. 1 ersichtlicher Strömungsweg für das zu filternde gasförmige Medium, der sich von einem unterhalb der Filtertrommel angeordneten Einlaßrohr zur Außenumfangsfläche der Filtertrommel erstreckt und letztere zunächst radial einwärts und dann axial nach oben durchsetzt und sich in ein Ableitungsrohr fortsetzt, wobei sich eine Saugströmung einstellt, da die Pumpe in Strömungsrichtung nach der Filtertrommel angeordnet ist.

Bei diesem bekannten Filtergerät ist der Filter blockförmig ausgebildet, wobei eine große radiale Dicke des Blocks erforderlich ist, um einen großen axialen Ausströmungsquerschnitt zu erreichen. Hierdurch ergeben sich lange Strömungswege im blockförmigen Filter, wodurch der Strömungsdurchgang beeinträchtigt wird und ein materialaufwendiger Filter erheblicher Baugröße vorgegeben ist. Außerdem ist die Zugänglichkeit zum Filter problematisch, weil z.B. für eine Kontrolle oder für einen Austausch des Filters das Gehäuse demontiert werden muß und selbst dann der Filter nur vom Inneren des Gehäuses her zugänglich ist. Der untere Teil des Gehäuses bildet einen Sammelbehälter für das Filtergut, das von der Außenumfangsfläche des Filters durch dessen Rotation abgeschleudert wird und nach unten in den Sammelbehälter fallt.

Der Erfindung liegt die Aufgabe zugrunde, ein Filtergerät der im Oberbegriff des neuen Anspruchs 1 beschriebenen Art so auszugestalten, daß der Durchströmungswiderstand des Filters verringert werden kann und die Zugänglichkeit zum Filter verbessert wird.

Diese Aufgabe wird durch die Merkmale des neuen Anspruchs 1 gelöst.

Beim erfindungsgemäßen Filtergerät ist ein Mantelfilter vorgesehen, wobei das gasförmige Medium den Filter gerade, nämlich radial nach innen zu durchströmt. Außerdem ist der Filter durch die von außen zugängliche Öffnung im Gehäuse leicht zugänglich, so daß Kontrollmaßnahmen und/oder ein Austausch des Filters leicht, handhabungsfreundlich und schnell durchgeführt werden können. Prinzipiell können Mantelfilter bei entsprechender Dimensionierung nicht nur eine große Anströmfläche, sondern auch eine große Abströmfläche aufweisen und mit einer verhältnismäßig kleinen Dicke verwirklicht werden, so daß ein geringer Durchströmungswiderstand erreicht werden, und die Innenmantelfläche des Filters als große Abströmfläche zur Verfügung stehen kann. Hierdurch kann auch ein Filter langer Lebensdauer erreicht werden, da er mit einem geringeren Durchströmungsweg ausgeführt werden kann und deshalb weniger zum Zusetzen neigt.

Es ist zwar aus der DE-OS 24 01 116 an sich bekannt, ein Filter in der Form eines Mantelfilters zu verwenden, der radial durchströmt wird, jedoch ist das aus dieser Druckschrift entnehmbare Filtergerät nicht von der gattungsgemäßen Art und außerdem weist dieser bekannte Mantelfilter keine freie Anström- und Abströmfläche auf, denn er befindet sich zwischen einer Lochhülse und einer perforierten Hohlwelle, wobei die Lochhülse an der Außenmantelfläche und die perforierte Hohlwelle an der Innenmantelfläche des Mantelfilters anliegt. Ferner läßt sich zwar dieser bekannte Mantelfilter durch eine Öffnung im Gehäuse demontieren, jedoch handelt es sich hierbei um eine von außen nicht frei zugängliche innere Öffnung.

Für eine erfindungsgemäße Vorrichtung eignet sich ein mantelförmiger, insbesondere hohlzylindrischer Filter sehr gut, den das Medium im Betrieb radial von außen nach innen durchströmt. Ein solcher Filter bietet nicht nur eine große Filterfläche, sondern es ergibt sich auch eine große zu reinigende Fläche.

In den Unteransprüchen sind Merkmale enthalten, die zur Problemlösung beitragen, vorteilhafte Detailkonstruktionen ergeben, die sich ausgestaltungstechnisch, strömungstechnisch und im Hinblick auf eine einfache Montage bzw. Demontage sowie Handhabung vorteilhaft in ein Gerät bzw. Gehäuse integrieren lassen, dabei von einfacher Ausgestaltung sind und sich kostengünstig herstellen lassen. Dabei wird auch eine kompakte Bauweise, insbesondere in Säulenform erreicht, so daß für ein erfindungsgemäßes Filtergerät wenig Stellraum beansprucht wird.

Nachfolgend werden die Erfindung und weitere durch sie erzielbare Vorteile anhand einer Zeichnung und bevorzugter Ausführungsbeispiele näher erläutert. Es zeigt
- Fig. 1: ein erfindungsgemäßes Filtergerät mit integrierter Saugeinrichtung in der Vorderansicht, teilweise vertikal geschnitten;
- Fig. 2: das Filtergerät im seitlichen vertikalen Schnitt.

Das Filtergerät 1 ist mit seinen zugehörigen Einrichtungen in ein quaderförmiges Gehäuse 2 integriert, das verhältnismäßig schmal und hoch gebaut und somit säulenförmig ist. In der Vorderansicht gesehen, beträgt seine Breite b etwa 30 cm, seine nach hinten gerichtete Tiefe t etwa 60 cm und seine Höhe h etwa 80 cm. Diese Größe ermöglicht es nicht nur, das Filtergerät 1 raumgünstig aufzustellen, sondern es eignet sich auch dazu, zahntechnischen Arbeitsplätzen, insbesondere -tischen, als Beistellgerät zugeordnet zu werden. Das Filtergerät 1 ist höheneinstellbar, vorzugsweise mittels vertikal in den Gehäuseboden eingeschraubten und festgestellten Schrauben 2a.

Das Gehäuse 2 begrenzt drei übereinander angeordnete Hauptabteilungen, nämlich eine untere Hauptabteilung 3, in der eine Saugeinrichtung hier in Form eines von einem Motor 4 angetriebenen Ventilators 5 angeordnet ist, eine mittlere Hauptabteilung 6, in der die eigentliche Filtervorrichtung 7 im oberen Bereich der Hauptabteilung 6 und darunter ein Filtergut-Sammelbehälter 8 angeordnet sind, und eine obere Hauptabteilung 9 für sonstige Einrichtungen, die bei der vorliegenden Ausgestaltung in zwei übereinander angeordnete Einzelabteilungen unterteilt ist, die zur Aufnahme einer elektronischen Steuereinrichtung 13 und einem Fach 14 für Werkzeug oder Zubehör, z.B. in Form einer Schublade, ausgebildet ist, wobei bei der vorliegenden Ausgestaltung das Fach 14 über dem Fach für die Steuereinrichtung 13 angeordnet ist. Am Frontseitenteil der die Steuereinrichtung 13 aufnehmenden Einzelabteilung sind manuell zu bedienende Steuerelemente und Anzeigeelemente angeordnet.

Die vorgenannten Hauptabteilungen 3, 6 und 9 erstrecken sich im wesentlichen von der Frontwand 15 bis zur Rückwand 16 und von der einen bis zur anderen Seitenwand 17, 18, wobei die mittlere Hauptabteilung 6 frontseitig eine im wesentlichen den zugehörigen gesamten Frontseitenteil umfassende Haupföffnung 19 aufweist, die durch eine Tür 21 mittels einer Öffnungsranddichtung dicht verschließbar und somit von vorne zugänglich ist. In vergleichbarer Weise kann auch die untere Hauptabteilung 3 von vorne zugänglich sein. Bei der vorliegenden Ausgestaltung ist die untere Hauptabteilung 3 durch die mittlere Hauptabteilung 6 hindurch zugänglich. Hierzu ist die Bodenwand 22 der mittleren Hauptabteilung 6 lösbar und nach oben und vorne herausnehmbar angeordnet. Nach einem Herausnehmen der Bodenwand 22 ist somit die untere Hauptabteilung 3 von oben durch die Hauptöffnung 19 hindurch zugänglich. In vergleichbarer Weise ist auch die obere Hauptabteilung 9 von vorne zugänglich, wobei die elektronische Steuereinrichtung 13 in Form mehrerer Einzelteile oder als Block, hier in der Schublade, nach vorne herausziehbar und somit von vorne zugänglich sind. In den Seitenwänden 17, 18 sind keine Zugangsöffnungen vorhanden, so daß das Filtergerät 1 seitlich unmittelbar angestellt werden kann.

Die Filtervorrichtung 7 weist ein - abgesehen von erforderlichen Zugangs-und Abgangsöffnungen - geschlossenes Filtervorrichtungsgehäuse 23 auf, das durch eine horizontale Teilungsfuge 24 in ein Unterteil 26 und ein Oberteil 25 unterteilt ist, wobei das Unterteil 26 durch den topfförmigen Sammelbehälter 8 gebildet ist, der oben eine rechteckige Behälteröffnung 27 aufweist, die unterhalb des Filters 28 der Filtervorrichtung 7 angeordnet ist. Die Filtervorrichtung 7 weist eine Haltevorrichtung 29 für den hohlzylindrischen Filter 28 auf, die mittels eines Elektromotors 32 um eine Drehachse 33 drehbar ist, die sich bei der vorliegenden Ausgestaltung horizontal und rechtwinklig zur Bedienungsseite 34, d.h. von vorne nach hinten, erstreckt, wodurch die verhältnismäßig schmale Breite b und die verhältnismäßig große Tiefe t des Filtergeräts 1 gut ausgenutzt werden. Zwischen dem Oberteil 25 und dem Unterteil 26 ist eine Ringdichtung 24a angeordnet, die vorzugsweise an einem dieser Teile befestigt, insbesondere geklebt, ist.

Das Oberteil 25 des Filtervorrichtungsgehäuses 23 ist mit vertikalen Seitenwänden 35, einer vertikalen Vorderwand 36 und einer im wesentlichen vertikalen Rückwand 37 kastenförmig geformt, wobei der obere Bereich des Filtervorrichtungsgehäuses 23 mehrkantig oder gerundet domförmig geformt ist. An der Rückwand 37 ist koaxial zur Drehachse 33 ein rundes Tragrohr 38 mit radialen Löchern 40 befestigt, das die Rückwand 38 nach hinten durchsetzen und mit einer rückseitigen Verlängerung einen Anschlußstutzen 39 für einen Schlauch oder ein Rohr aufweisen kann. Am vorderen Ende des Tragrohrs 38 ist der Elektromotor 32 koaxial angeflanscht, dessen Antriebswellenzapfen 41 sich koaxial nach vorne erstreckt. Auf dem Antriebswellenzapfen 41 sitzt drehfest ein Triebflansch 42 mit einer Nabe, auf der die vordere von zwei runden Haltescheiben 44a, 44b aufschraubbar ist. Zwischen den Haltescheiben 44a, 44b ist der Filter 28 durch leichtes axiales Zusammendrücken gehalten. Die hintere Haltescheibe 44b ist mittels eines Wälzlagers 45 auf dem hinteren Bereich des Tragrohrs 38 frei drehbar gelagert und mittels einer Ringdichtung 46 abgedichtet. Die Haltescheiben 44a, 44b weisen auf ihren einander zugewandten Seiten jeweils eine an die Querschnittsform und Größe des Filters 28 angepaßte Ringnut auf, in denen der hohlzylindrische Filter 28 mit seinen Ringenden sitzt. Vorzugsweise ist innerhalb des Filters 28 ein hier ebenfalls hohlzylindrischer Sicherheitsfilter 48 angeordnet und zwischen den Haltescheiben 44a, 44b gehalten, die hier zu jeweils eine weitere innere Ringnut aufweisen, in denen die Ringenden des Sicherheitsfilters 48 sitzen. Zwischen dem Filter 28 und dem Sicherheitsfilter 48 ist ein radialer Abstand und somit ein Ringfreiraum 51 vorhanden. Der Filter 28 bzw. der Sicherheitsfilter 48 umgeben somit das Tragrohr 38 und den Elektromotor 32 koaxial und einem radialen Abstand, wodurch ein weiterer Ringfreiraum 52 gebildet ist.

Das Tragrohr 38 und der damit starr verbundene Elektromotor 32 sind durch ein Stützlager 53 an der Vorderwand 36 des Oberteils 25 abgestützt. Vorderseitig weist das Oberteil 25 eine Montageöffnung 54 auf, die größer bemessen ist, als die vordere Haltescheibe 44a und der Filter 28, so daß diese Teile von vorne montiert bzw. demontiert werden können. Die Montageöffnung 54, die bei der vorliegenden Ausgestaltung fast den gesamten Bereich der Vorderwand 36 einnimmt, ist durch eine Verschlußtür dicht verschließbar. Bei der vorliegenden Ausgestaltung ist eine nach unten wegklappbare Klapptür 55 vorgesehen, die im Bereich ihrer Unterkante in einem Gelenk 56 mit horizontaler Gelenkachse angelenkt ist und ein an ihrer Innenseite befestigtes Lagerteil, hier eine Lagernabe 58, trägt, das beim Schließen der Klapptür 55 in oder auf ein passendes Lagerteil, hier einen Lagerzaplen 57, steckbar ist, das mittels eines Wälzlagers 61 in der Nabe des Triebflansches 42 drehbar gelagert und dadurch axial gehalten ist, so daß es beim Öffnen der Klapptür 55 am Triebflansch 42 verbleibt. Beim Schließen der Klapptür 55 werden die vorgenannten Lagerteile 57 und 58 selbsttätig zusammengeführt, wobei dazwischen eine vorzugsweise formschlüssige Drehsicherung vorhanden sein kann, damit das Lagerteil 57 im Betrieb nicht mitdreht.

Die Teilungsfuge 24 befindet sich in einem nach unten gerichteten Abstand von der Unterseite des Filters 28.

Das Filtervorrichtungsgehäuse 23 ist schwingungsgedämpft, nämlich vertikal und horizontal frei schwimmend bzw. federnd im Gehäuse 2 gelagert. Hierzu dient eine Aufhängevorrichtung 62 mit elastischen Tragteilen, insbesondere Gummistücken, am oberen Bereich des Oberteils 25. Wie insbesondere Fig. 1 deutlich zeigt, sind am Oberteil 25 seitlich abstehende Winkel-Tragschenkel 64 befestigt, die am Gehäuse 2 befestigte horizontale Tragschienen 65 übergreifen, wobei die Tragschenkel 64 bei Zwischenlage von elastischen Gummistücken auf den Tragschienen 65 abgestützt sind. Diese Ausgestaltung ermöglicht eine einfache und leichte Montage des Filtervorrichtungsgehäuses 23 durch Einschieben bzw. Herausziehen von vorne. Zwischen vertikalen Stegen der Tragschenkel 64 und Tragschienen 65 können vorzugsweise Schwingungsdämpfer 67 in Form von Gummistücken vorhanden sein, wobei horizontale Querschrauben vertikale Stege der Tragschenkel 64 und Tragschienen 65 und die Schwingungsdämpfer 67 durchfassen können.

Der topfförmige Sammelbehälter 8 weist eine im wesentlichen ebene Bodenwand 68 rechteckiger Form und vier sich von dieser nach oben erstreckende Umfangswände, nämlich zwei einander gegenüberliegende Seitenwände 69 sowie eine Vorderwand 71 und eine Rückwand 72 auf, so daß sich die rechteckige Behälteröffnung 27 ergibt, die von den Umfangswänden begrenzt ist und deren Form und Größe der unterseitigen Öffnung des Oberteils 25 entspricht. Der obere Randbereich des Sammelbehälters 8 ist durch einen nach außen abstehenden Kragen 70 mit einem seitlich abstehenden Kragenschenkel und einem sich von diesem nach oben erstreckenden Kragenschenkel, die eine nach oben offene Außenrinne 76 begrenzen, gebildet. Sowohl der durch die Umfangswände gebildete Innenrand 77 als auch der Außenrand 78 liegen dicht an der flachen Ringdichtung 24a an, die an einem Randflansch 79 am unteren Rand des Oberteils 25 befestigt ist. Die Höhe des Sammelbehälters 8 ist etwas geringer bemessen als der vertikale Abstand zwischen Tragteilen auf der Bodenwand 22, auf denen der Sammelbehälter 8 aufstellbar ist und der Unterseite des Oberteils 25. Der Sammelbehälter 8 kann somit bequem von vorne in die mittlere Hauptabteilung 6 eingeschoben und herausgezogen werden. Zum dichten Verschließen des Sammelbehälters 8 an der Unterseite des Oberteils 25 dient eine Schließvorrichtung 81, die den Sammelbehälter 8 untergreift und nach oben gegen das Oberteil 25 drückt und in dieser Position sichert. Vorzugsweise sind zu beiden Seiten des Sammelbehälters 8 spiegelbildlich angeordnete Schließvorrichtungen 81 mit Druckteilen z.B. in Form von quer angeordneten Druckbolzen 82 vorgesehen, die an auf Lagerbolzen 80 schwenkbar gelagerten Hebelarmen 83 befestigt sind, von seitlich außen den Kragen 70 in etwa mittlerer Position untergreifen und durch Schwenken dieser Druckbolzen 82 durch gleichzeitiges Drehen der zu beiden Seiten angeordneten Hebelarme 83 den Sammelbehälter 8 anheben und gegen die Ringdichtung 24a drücken. In der Drehendstellung der Hebelarme 83 befinden sich die Druckbolzen 82 direkt über dem zugehörigen Lagerbolzen 80 oder vorzugsweise geringfügig hinter dem oberen Totpunkt, wodurch ein selbsttätiges Losen der Schließvorrichtung 81 verhindert ist. Zur gleichzeitigen Drehung der Hebelarme 83 dient ein U-förmiger Handbügel 85, der den Sammelbehälter 8 von der Vorderseite her U-förmig umgreift. In der nach oben geschwenkten Offenstellung des Handbügels 85 befindet sich sein vorderer Bügelsteg 86 oberhalb des Sammelbehälters 8 so daß er seiner Einschiebung und Herausziehung nicht im Wege steht. Die Lagerbolzen 80 können an den Seitenwänden 17, 18 des Gehäuses 2 befestigt sein. Vorzugsweise sind die Lagerbolzen 80 am Oberteil 25 befestigt und zwar hier an von den Seitenwänden des Oberteils 25 nach unten ragenden Seitenwangen 87 befestigt. Hierdurch ist auch die Schließvorrichtung 81 ein Teil der Filterbaueinheit, und sie ist deshalb nicht nur mit dieser Baueinheit schwingungsgedämpft gelagert, sondern sie kann auch an dieser Baueinheit vormontiert werden.

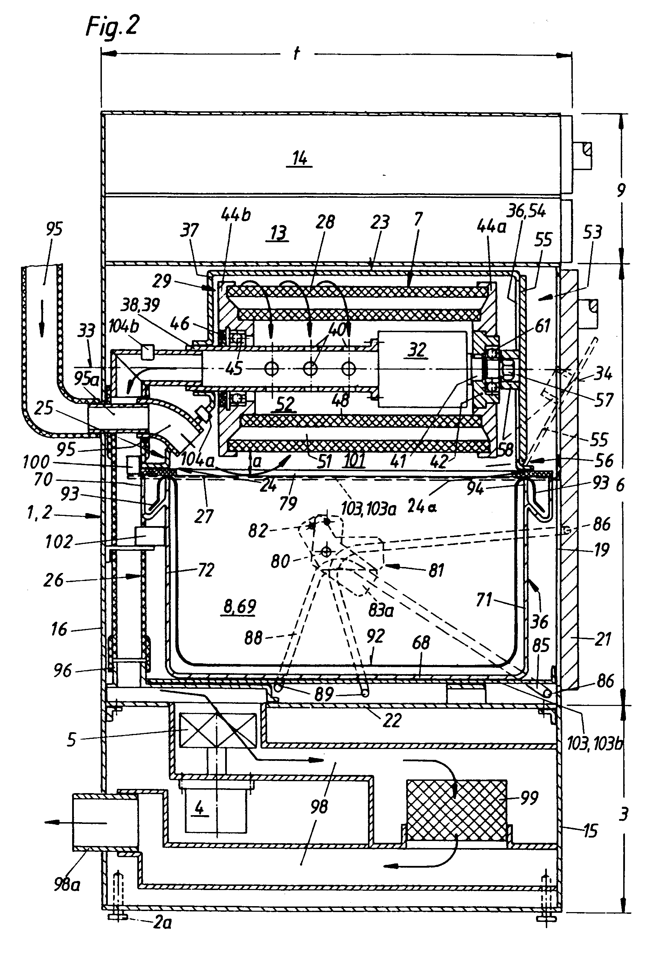

Der Handbügel 85 ist vorzugsweise so angeordnet und bemessen, daß sein freies Bügelende in der Schließstellung (in Fig. 2 mit durchgezogenen Linien dargestellt) sich unmittelbar hinter der Innenfläche der Tür 21 und dabei in einem größeren Vertikalabstand von den Lagerbolzen 80 befindet. Bei einer solchen Anordnung kann die Tür 21 nur dann geschlossen werden, wenn sich der Handbügel 85 in seiner Schließstellung befindet. Bei einem nicht korrekten Verschluß befindet sich der Handbügel 85 oberhalb seiner Schließstellung, wobei er aufgrund seiner Bogenbewegung in den Bewegungsbereich der Tür 21 hineinsteht, so daß diese nicht geschlossen werden kann. Hierdurch ist eine mechanische Sicherheitsvorrichtung geschaffen, die der Bedienungsperson deutlich anzeigt, daß der Sammelbehälter 8 nicht dicht angeschlossen ist. Dies ist insbesondere bei der Filterung von gesundheitsgefährdenden Stoffen von Bedeutung, wie sie auch in der Dentaltechnik verwendet, um zu verhindern, daß diese Stoffe nach außen in den das Filtergerät 1 umgebenden Arbeitsraum gelangen.

Bei der vorliegenden Ausgestaltung ist der Handbügel 85 mit seinen freien U-Enden an Doppelarmen 83a der Hebelarme 83 befestigt. Dabei ist ein weiterer U-förmiger Verschlußbügel 88 vorgesehen, der sich von den Hebelarmen 83 nach unten erstreckt und mit seinem Bügelsteg 89 den Sammelbehälter 8 untergreift und dabei gleichzeitig zusätzlich stützt, wodurch die Druckbelastung von den Druckbolzen 82 auf den Kragen 70 reduziert werden kann. Um die Flächenpressung zwischen den Druckbolzen 82 und dem Kragen 70 zu verringern, ist es vorteilhaft, im Bereich der Druckbolzen 82 an der Unterseite des Kragens 70 eine Leiste 91 aus hartem Material, wie z.B. Stahl, einzubetten, oder in eine Nut fest einzusetzen, gegen die der zugehörige Druckbolzen 82 drückt.

Insbesondere beim Filtern von umweltschädlichen und gesundheitsgefährdenden Substanzen sind folgende Ausgestaltungen vorteilhaft. Damit beim Herausnehmen des Sammelbehälters 8 kein Staub vom Filter 28 oder vom Gehäuseoberteil 25 in das Gehäuse der Hauptabteilung 6 bzw. auf die Bodenwand 22 fällt, wird ein vorzugsweise plattenförmiger Schieber 103 nach dem Absenken des Sammelbehälters 8 (ca. 8 mm nach unten) zwischen zwei seitlichen Führungsschienen 105 und dem Oberteil 25 bzw. der Ringdichtung 24a eingeschoben (Position 103a).

Der vorzugsweise aus ferromagnetischem Material wie Stahl bestehende Schieber 103 kann mittels einer Haltevorrichtung oder einer Führung verschiebbar und dicht am Gehäuseoberteil 25 gehalten sein, z.B. mittels wenigstens einem, insbesondere an der Rückseite angeordneten, oder verteilt angeordneten Permanentmagneten 100, und gegen die Dichtung 24a gezogen oder gedrückt werden, um die Abdichtung während der Abwesenheit des Sammelbehälters 8 zu verbessern.

Die Führungsschienen 105 sind vorzugsweise Winkelschienen, die seitlich am Gehäuseoberteil 25 befestigt sind (Fig. 1).

Der Schieber 103 wird vor dem Absenken des Sammelbehälters 8 aus einer Parkposition 103b, in der er unter dem Sammelbehälter 8 eingeschoben ist, entnommen, ansonsten funktioniert der Absenkmechanismus nicht, da er gesperrt ist.

Der Sammelbehälter 8 läßt sich nach dem Entleeren auch nicht in die Funktionsstellung bringen, wenn nicht zuvor der Schieber 103 aus einer Parkposition 103b entfernt wurde. Dies läßt sich dadurch erreichen, daß der Handbügel 85, hier der Bügelsteg 89, gegen das vorzugsweise vordere Ende des Verschlußteils 103 stößt, in dessen Bewegungsbahn das Verschlußteil 103 in seiner Park- bzw. Abstellposition hineinragt, d.h. der Standhebel 85 läßt sich nicht unter den Sammelbehälter 8 schwenken, so daß sich auch die Tür 21 nicht schließen läßt.

Die Hubhöhe der Anschluß- bzw. Kupplungsvorrichtung ist etwas größer bemessen als die Dicke des Verschlußteils 103. In der Verschlußstellung des Verschlußteils 103 steht das vordere Ende nahe oder direkt hinter der Tür 21. Dies gilt vorzugsweise auch für die Abstellposition. Wenn die Tür 21 sich nicht schließen läßt, ist es ein Erkennungszeichen, daß der ordnungsgemäße bzw. dichte Anschluß des Sammelbehälters nicht gewährleistet ist. Durch einen Schaltkontakt (nicht dargestellt) zwischen der Tür 21 und dem Gehäuse 2 läßt sich dies durch einen Summer akustisch oder durch eine Warnlampe visuell verdeutlichen, oder es läßt sich auch durch eine Schaltung das Einschalten des Filtergerätes verhindern. Ein solcher Schaltkontakt kann auch zwischen dem Gehäuse 2 oder Anbauteilen und dem Verschlußteil 103 in dessen Verschlußstellung wirksam sein.

Das sind sehr vorteilhafte Sicherheitsmaßnahmen zur Vermeidung des unbeabsichtigten Entweichens von insbesondere gesundheitsgefährenden Stäuben.

Außerdem wird der Schieber beim Herausziehen von der Dichtung 24a abgestreift, der Staub fällt dabei in den darunter stehenden Sammelbehälter 8.

Außerdem ist es vorteilhaft, im Sammelbehälter 8 einen Beutel 92 insbesondere aus Kunststoffolie anzuordnen, der vorzugsweise so tief bemessen ist, daß seine freien Ränder für die Entsorgung z.B. durch Verknoten beschlossen werden können. Der Beutel 92 ist am Rand des Sammelbehälters 8 abzudichten, damit möglichst kein Filtergut hinter den Beutel 92 oder in den Innenraum des Gehäuses 2 gelangt. Bei der vorliegenden Ausgestaltung wird der überstehende Rand 93 des in den Sammelbehälter 8 eingesetzten Beutels 92 über den Innenrand 77 gekrempelt und in die Außenrinne 76 gegebenenfalls gefaltet eingelegt. Hierdurch ist der Rand 93 zwischen dem Innenrand 77 und der Ringdichtung 24a festgeklemmt. Die eigentliche Dichtfunktion nach außen wird vom Kragen 70 gewährleistet, der von unten gegen die Ringdichtung 24a drückt. Im Innenrand 77 sind mehrere auf dem Umfang verteilt angeordnete Löcher oder Ausnehmungen 94 vorgesehen, deren Funktion weiter unten noch erklärt wird.

Das Filtervorrichtungsgehäuse 23 ist an eine vorzugsweise flexible Zuführungsleitung 95, insbesondere Schlauchleitung, für zu filternde Luft angeschlossen, die die Rückwand 16 des Gerätegehäuses 2 in einer Durchführung, z.B. in Form eines Anschlußstutzens 95a, durchsetzt und an einen Leitungsanschluß in der Rückwand 37 des Oberteils 25 angeschlossen ist. Ein weiterer vorzugsweise flexibler Rohr- oder Schlauchabschnitt erstreckt sich vom Anschlußstutzen 39 des Tragrohrs 38 zum Ventilator 5, wobei er an einen Anschlußstutzen 96 der Bodenwand 22 angeschlossen ist, der sich hinter dem Sammelbehälter 8 befindet. Unter der Bodenwand 22 befindet sich der Ventilator 5 in einem weiteren Leitungsabschnitt 98 in der unteren Hauptabteilung 3, die sich U-förmig zu einem Aktivkohlefilter 99 und dann zur Rückwand 16 erstreckt, die sie in einer Durchführung 98a durchsetzt und an die eine weiterführende Abführungsleitung angeschlossen sein kann.

Im folgenden wird die Funktion des Filtergeräts 1 beschrieben.

Vor einem Filtervorgang ist der Sammelbehälter 8 dicht am Oberteil 25 anzuschließen. Anschließend kann der Ventilator 5 eingeschaltet werden, wodurch der Filtervorgang beginnt. Der Ventilator 5 saugt aufgrund der Luftströmung die zu filternde Luft in den Innenraum des Filtervorrichtungsgehäuses 23 ein, der aufgrund seines gegenüber der Zuführungsleitung 95 vergrößerten Volumens einen Beruhigungsraum 101 darstellt. Der letzte Endbereich der Zuführungsleitung 95 ist schräg nach unten gerichtet, vorzugsweise in die Mitte des Sammelbehälters 8. Um dies auf einfache Weise zu ermöglichen, ist bei der vorliegenden Ausgestaltung die Rückwand 37 des Oberteils 25 im Bereich der Zuführungsleitungsdurchführung nach hinten schräg abfallend geformt. Beim Eintritt in den Beruhigungsraum 101 beruhigt sich die Strömung, wobei grobes Filtergut direkt in den Sammelbehälter 8 bzw. in den Beutel 92 absinkt. Leichteres Filtergut wird mit dem Luftstrom nach oben zum Filter 28 gelenkt, den einschließlich des Sicherheitsfilters 48 der Luftstrom auf der gesamten Mantelfläche radial einwärts durchströmt und durch die radialen Löcher 40 in das Tragrohr 38 und dann weiter zum Ventilator 5 strömt. Druckseitig vom Ventilator 5 wird die Luft noch durch den Aktivkohlefilter 99 geführt, und sie kann dann in den das Filtergerät 1 umgebenden Raum abgegeben werden oder in einer nicht dargestellten Rohr- oder Schlauchleitung weitergeführt und an die Außenatmosphäre abgegeben werden. Beim Durchströmen des Filters 28 lagert sich das Filtergut auf dessen Mantelfläche ab, so daß die Durchlässigkeit des Filters 28 sich verringert und der Unterdruck im Bereich zwischen dem Ventilator 5 und dem Filter 28 sich erhöht.

Vorzugsweise ist der Ventilator 5 bzw. Elektromotor 4 so drehzahlgeregelt, daß die geförderte Luftmenge immer einem vorbestimmten, optimalen Wert entspricht, was nach Maßgabe z.B. eines Durchflußmessers mittels einer Regeleinrichtung geregelt werden kann. Hierdurch wird nicht nur eine zu große Luftförderung bzw. -verbrauch verhindert, sondern in dem Fall, indem die zu filternde Luft von einem zahntechnischen Arbeitsplatz abgesaugt wird, wird zum einen verhindert, daß ein unangenehmer Luftzug an den Händen des Benutzers auftritt, oder zum anderen zu wenig Luft abgesaugt wird.

Der Beutel 92 ist dem beim Ein- und Ausschalten des Ventilators 5 und auch durch unterschiedliche Verschmutzungsgrade des Filters 28 Druckunterschieden ausgesetzt, die zu entsprechenden Bewegungen der Beutelwand führen, wodurch diese erheblich beansprucht wird und ermüden sowie brechen kann. Dieses Problem ist insbesondere beim Filtern umweltgefährender Substanzen von besonderer Bedeutung. Um diese Beanspruchungen des Beutels 92 zu vermeiden, ist wenigstens ein zur Außenseite des Beutels führender Bypass vorgesehen, der zu einem Druckausgleich innerhalb und außerhalb des Beutels 92 führt, wodurch die vorgenannten Belastungen auf den Beutel 92 vermieden sind. Bei der vorliegenden Ausgestaltung sind solche Bypässe durch die Löcher oder Ausnehmungen 94 gebildet, durch die sich der jeweils herrschende Druck in die Außenrinne 76 und von dort zur Rückseite des Beutels 92 fortpflanzen kann. Dabei bleibt durch den Außenrand 78 die Abdichtung des Filterraumes aufrechterhalten.

Wenn der Filter 28 sich im Laufe der Betriebszeit zusetzt und gereinigt werden soll, was sich durch eine Druckerhöhung im Bereich zwischen dem Filter 28 und dem Ventilator 5 bemerkbar macht, wird der Ventilator 5 abgeschaltet und anschließend - gegebenenfalls nach dessen Stillstand - der Elektromotor 32 eingeschaltet, der die Haltevorrichtung 29 mit dem Filter 28 in Rotation versetzt. Hierdurch wird das auf den Filter 28 gelagerte und gegebenenfalls auch geringfügig in den Filter 28 eingedrungene Filtergut abgeschleudert, wodurch die beabsichtigte Reinigung erzielt wird. Bei Versuchen, bei denen ein hohlzylindrischer Filter 28 mit einem Durchmesser von etwa 180 mm verwendet wurde, hat sich eine Drehzahl von etwa 1200 Umdrehungen pro Minute als ausreichend erwiesen, um den Filter 28 in der vorbeschriebenen Weise zu reinigen. Diese Reinigung kann an der Arbeitsstelle des Filters 28 erfolgen, ohne daß er demontiert zu werden braucht.

Das vom Filter abgeschleuderte Filtergut fällt zwangsläufig aufgrund der Schwerkraft in den Sammelbehälter 8. Die Reinigungswirkung ist am größten, wenn die Außermantelfläche des Filters 28 kreisrund ist, weil die beim Drehen entstehende Fliehkraft direkt auf das Filtergut wirken kann. Es ist bei Versuchen jedoch ermittelt worden, daß auch solche hohlzylindrischen Filter, bei denen die Filtermantelfläche durch sich in Umfangsrichtung aneinander anschließende Falten gebildet wird, sich vorzüglich dazu eignet, nach dem erfindungsgemäßen Verfahren gereinigt zu werden.

Die Remigungswirkung kann dadurch forciert werden, daß während der Drehung, d.h. während der Beaufschlagung des Filtergutes mit Fliehkraft, der Filter 28 etwas erschüttert wird, z.B. durch Klopfen oder Vibrieren. Solche Erschütterungen forcieren die Ablösung des Filterguts vom Filter 28.

Für die Zeitpunkte, zu denen der Filter 28 in Rotation versetzt werden soll, gibt es verschiedene Möglichkeiten. Wenn in der Strömungsleitung zwischen dem Filter 28 und dem Ventilator 5 ein Unterdrucksensor vorgesehen ist, der durch Signalleitungen mit der vorhandenen Steuer- oder Riegeleinrichtung verbunden ist, dann kann der Filter 28 automatisch in Rotation versetzt werden, wenn ein bestimmter Unterdruck überschritten wird.

Alternativ hierzu kann auch eine Differenzdruckmeßeinrichtung oder ein Differenzdruckschalter eingesetzt werden, der die Unterdruckdifferenz vor und nach dem Filter 28 mißt. Hierzu kann ein Drucksensor 104a im Gehäuseoberteil 25 und ein Unterdrucksensor 104b in der Strömungsleitung zwischen Filter 28 und Ventilator 5 vorgesehen sein.

Es ist aber auch möglich, daß der Unterdrucksensor lediglich eine Anzeige in Funktion setzt, die der Bedienungsperson signalisiert, daß der Filter 28 von Hand eine bestimmte Zeit lang in Rotation versetzt werden soll. Für diesen Fall ist dem Filtergerät 1 ein entsprechendes Bedienungselement zugeordnet. Eine andere Möglichkeit besteht darin, - falls kein Unterdrucksensor vorgesehen ist - eine Rotation des Filters 28 in unregelmäßigen oder regelmäßigen (beispielsweise jeden Morgen) vorzusehen.

Anstatt einer Unterdrucküberwachung kann auch das geförderte Luftvolumen überwacht bzw. gemessen werden, um eine Drehung des Filters 28 zu bestimmen und einzuleiten.

Der Filtervorgang kann nach Abschaltung der Rotation wieder begonnen werden.

Dem Sammelbehälter 8 ist eine Einrichtung zur Überwachung oder Messung des Füllstandes zugeordnet. Hierbei kann es sich um ein Schauglas oder eine elektrisch funktionierende Einrichtung handeln. Bei der vorliegenden Ausgestaltung ist ein gegebenenfalls kapazitiv wirksamer Füllstandsmesser 102 mittels einem Halter innen am Gehäuse 2 befestigt, der durch eine nicht dargestellte Signalleitung mit der elektronischen Steuereinrichtung 13 verbunden ist und ein Warnsignal abgibt oder vorzugsweise den Ventilator 5 und somit das Filtergerät abschaltet.

Ein erfindungsgemäßes Filtergerät 1 eignet sich jeweils sowohl für einen oder zwei zahntechnische Arbeitsplätze, oder es kann bei entsprechender Kapazitätsauslegung auch mit einer Vielzahl Arbeitsplätze verbunden sein. Dabei kann das Filtergerät 1 im die Behandlungsplätze enthaltenden Raum angeordnet sein, oder es kann in einem besonderen Raum oder auch außen von einem die Arbeitsplätze enthaltenen Gebäude angeordnet sein. Im ersten Falle läßt sich Heizenergie einsparen, da die gefilterte Luft dem Raum wieder zugute kommt.

In allen vorbeschriebenen Fällen ist es vorteilhaft, den Ventilator 5 in Abhängigkeit von der Einschaltung eines Bearbeitungsgerätes an wenigstens einem der vorhandenen Arbeitsplätze so zu steuern, daß nur bei der Einschaltung wenigstens eines der vorhandenen Arbeitsgeräte der Ventilator in Betrieb gesetzt wird.

## Patentansprüche

1. Filtergerät (1) für ein gasförmiges Medium, mit
- einem Filtervorrichtungsgehäuse (23),
- einem Filter (28), der im Filtervorrichtungsgehäuse (23) in einem letzteres durchsetzenden Strömungsweg angeordnet und an einer Haltevorrichtung (29) befestigt ist, die um eine Drehachse drehbar gelagert und durch einen Antrieb (32) drehbar ist,
- und einem Sammelbehälter (8) für das Filtergut, der unterhalb des Filters (28) angeordnet ist,
- wobei der Filter (28) lösbar an der Haltevorrichtung (29) gelagert ist,
**dadurch gekennzeichnet**,
daß der Filter (28) ein Mantelfilter ist, dessen Innenmantelfläche eine freie Abströmfläche ist, die den im Bereich des Mantelfilters verlaufenden inneren Abströmungswegabschnitt begrenzt, und daß das Filtervorrichtungsgehäuse (23) eine von außen zugängliche Öffnung (54) aufweist, durch die der Filter (28) zugänglich und gegebenenfalls austauschbar ist ist, und die durch eine Tür (55) verschließbar ist.

2. Filtergerät nach Anspruch 1,
**dadurch gekennzeichnet,**
daß die Drehachse (33) der Haltevorrichtung (29) horizontal und vorzugsweise etwa rechtwinklig zu einer Bedienungsseite (34) angeordnet ist.

3. Filtergerät nach Anspruch 1 oder 2,
**dadurch gekennzeichnet**,
daß die Haltevorrichtung (29) durch zwei die Stirnenden des Mantelfilters zwischen sich haltende Haltescheiben (44a, 44b) gebildet ist, daß eine Saugleitung (90) vorzugsweise an denk vom Mantelfilter (28) umgebenen Raum (52) angeschlossen ist und eine Zuführungsleitung (95) an den den Mantelfilter (28) umgebenden Raum (101) angeschlossen ist.

4. Filtergerät nach einem der vorherigen Ansprüche,
**dadurch gekennzeichnet**,
daß das Filtervorrichtungsgebäude (23) ein Innengehäuse ist, das in einem ein Außengehäuse bildendes Gehäuse (2) vorzugsweise schwingungsgedämpft gelagert ist.

5. Filtergerät nach einem der vorherigen Ansprüche,
**dadurch gekennzeichnet**,
daß der untere Teil (26) des Filtervorrichtungsgehäuses (23) den Sammelbehälter (8) bildet, daß der Sammelbehälter (8) vorzugsweise lösbar und durch eine Öffnung (19) im Gehäuse (2) zur Entsorgung zugänglich oder entfernbar ist, wobei die Öffnung (19) frontseitig angebracht ist.

6. Filtergerät nach Anspruch 5,
**dadurch gekennzeichnet**,
daß eine vorzugsweise manuell betätigbare Anschluß- bzw. Kupplungsvorrichtung (81) zum Ankuppeln des Sammelbehälters (8) von unten an den oberen Teil (25) des Filtervorrichtungsgehäuse (23) vorgesehen ist, die insbesondere durch ein Hebelgestänge gebildet ist.

7. Filtergerät nach einem der vorherigen Ansprüche,
**dadurch gekennzeichnet**,
daß das Gehäuse (2) die Form einer quaderförmigen Säule mit mehreren, übereinander angeordneten Abteilungen (3, 6, 9) aufweist und das Filtervorrichtungsgehäuse (23) in einer der Abteilungen, vorzugsweise in der mittleren Abteilung (6) angeordnet ist.

8. Filtergerät nach einem der vorherigen Ansprüche,
**dadurch gekennzeichnet**,
daß das Filtervorrichtungsgehäuse (23) bzw. der obere Teil (25) des Filtervorrichtungsgehäuse (23) im Bereich seiner Öffnung zum Sammelbehälter (8) bzw. zum unteren Teil (26) auch durch ein Verschlußteil verschließbar ist.

9. Filtergerät nach Anspruch 8,
**dadurch gekennzeichnet**,
daß das Verschlußteil durch die Öffnung (19) des Außengehäuses (2) zugänglich ist.

10. Filtergerät nach Anspruch 8 oder 9
**dadurch gekennzeichnet**,
daß das Verschlußteil ein vorzugsweise plattenförmiger Schieber (103) ist, der in einer Haltevorrichtung oder einer Fuhrung am Gehäuse (23) verschiebbar gelagert ist.

## Claims

1. Filter apparatus (1) for a gaseous medium, having
- a filter device housing (23),
- a filter (28) which is arranged in the filter device housing (23) in a flow path through the latter and is attached at a holding device (29) which is mounted rotatably around an axis of rotation and is rotatable by means of a drive (32),
- and a collection container (8) for the filtrate, which is arranged beneath the filter (28),
- whereby the filter (28) is releasibly mounted on the holding device (29),
characterized in that,
the filter (28) is a sheath filter the inner sheath surface of which is a free outflow surface which bounds the inner outflow path section running in the region of the sheath filter, and in that the filter device housing (23) has an externally accessible opening (54) by means of which the filter (28) is accessible and, if appropriate, exchangeable, and which is closable by means of a door (55).

2. Filter apparatus according to claim 1,
characterized in that,
the access of rotation (33) of the holding device (29) is arranged horizontally and preferably approximately at right angles to an operator side (34).

3. Filter apparatus according to claim 1 or 2,
characterized in that,
the holding device (29) is formed by means of two holder discs (44a, 44b) holding the ends of the sheath filter between them, in that a suction line (90) is connected preferably to the space (52) surrounded by the sheath filter (28) and a supply line (95) is connected to the space (101) surrounding the sheath filter (28).

4. Filter apparatus according to any preceding claim,
characterized in that,
the filter device structure (23) is an inner housing which is mounted, preferably in a vibration-damped manner, in a housing forming an external housing (2).

5. Filter apparatus according to any preceding claim,
characterized in that,
the lower part (26) of the filter device housing (23) forms the collection container (8), in that the collection container (8) is preferably releasible and accessible or removeable through an opening (19) in the housing (2), for disposal, whereby the opening (19) is provided at the front side.

6. Filter apparatus according to claim 5,
characterized in that,
there is provided a preferably manually actuable connection or coupling device (81) for coupling the collection container (8) from below on to the upper part (25) of the filter device housing (23), which connection or coupling device is in particular formed by means of a lever bar.

7. Filter apparatus according to any preceding claim,
characterized in that,
the housing (2) has the form of a block-like column having plurality of compartments (3, 6, 9) arranged one over the other and the filter device housing (23) is arranged in one of the compartments, preferably in the middle compartment (6).

8. Device according to any preceding claim,
characterized in that,
the filter device housing (23), or the upper part (25) of the filter device housing (23) is, in the region of its opening to the collection container (8) or to the lower part (26), also closable by means of a closure part.

9. Filter apparatus according to claim 8,
characterized in that,
the closure part is accessible through the opening (19) of the exterior housing (2).

10. Filter apparatus according to claim 8 or 9,
characterized in that,
the closure part is a preferably plate-like slider (103) which is mounted displaceably in a holding device or a guide on the housing (23).

## Revendications

1. Installation de filtration pour un fluide gazeux, comprenant :
- un boîtier de dispositif de filtration (23),
- un filtre (28) qui est disposé dans le boîtier de dispositif de filtration (23) dans un trajet d'écoulement parcourant ce dernier et est fixé à un dispositif de maintien (29) qui est monté en rotation autour d'un axe de rotation et peut être entraîné en rotation par un système d'entraînement (32),
- et un collecteur (8) pour la matière retenue par le filtre, disposé en dessous du filtre (28),
- le filtre (28) étant monté de façon démontable sur le dispositif de maintien (29),
**caractérisée par le fait**
que le filtre (28) est un filtre-enveloppe dont la surface d'enveloppe intérieure est une surface d'échappement libre qui délimite le tronçon de trajet d'échappement interne situé dans la zone du filtre-enveloppe, et que le boîtier de dispositif de filtration (23) présente une ouverture (54) accessible de l'extérieur, à travers laquelle le filtre (28) est accessible et, le cas échéant, échangeable et qui peut être obturée par une porte (55).

2. Installation de filtration suivant la revendication 1, caractérisée par le fait que l'axe de rotation (33) du dispositif de maintien (29) est horizontal et est disposé de préférence à peu près perpendiculairement à un côté de service (34).

3. Installation de filtration suivant la revendication 1 ou 2, caractérisée par le fait que le dispositif de maintien (29) est formé de deux plateaux de maintien (44a, 44b) maintenant entre eux les extrémités frontales du filtre-enveloppe, qu'une conduite d'aspiration (90) est raccordée de préférence à l'espace (52) entouré par le filtre-enveloppe (28) et qu'une conduite d'amenée (95) est raccordée à l'espace (101) entourant le filtre-enveloppe (28).

4. Installation de filtration suivant l'une des revendications précédentes, caractérisée par le fait que le boîtier de dispositif de filtration (23) est un boîtier intérieur qui est monté, de préférence avec effet d'amortissement des vibrations, dans un boîtier (2) formant un boîtier extérieur.

5. Installation de filtration suivant l'une des revendications précédentes, caractérisée par le fait que la partie inférieure (26) du boîtier de dispositif de filtration (23) constitue le collecteur (8), que le collecteur (8) est disposé de préférence de façon démontable et accessible ou amovible pour élimination à travers une ouverture (19) dans le boîtier (2), l'ouverture (19) étant disposée frontalement.

6. Installation de filtration suivant la revendication 5, caractérisée par le fait qu'elle comprend un dispositif de raccordement ou de couplage (81), de préférence à actionnement manuel, pour le couplage du collecteur (8) depuis le bas à la partie supérieure (25) du boîtier de dispositif de filtration (23), ce dispositif étant constitué en particulier par un système à leviers.

7. Installation de filtration suivant l'une des revendications précédentes, caractérisée par le fait que le boîtier (2) présente la forme d'une colonne parallélépipédique avec plusieurs compartiments superposés (3, 6, 9) et que le boîtier de dispositif de filtration (23) est disposé dans l'un des compartiments, de préférence dans le compartiment médian (6).

8. Installation de filtration suivant l'une des revendications précédentes, caractérisée par le fait que le boîtier de dispositif de filtration (23) ou la partie supérieure (25) du boîtier de dispositif de filtration (23) peut également être obturé par une partie d'obturation dans la zone de son ouverture vers le collecteur (8) ou vers la partie inférieure (26).

9. Installation de filtration suivant la revendication 8, caractérisée par le fait que la partie d'obturation est accessible à travers l'ouverture (19) du boîtier extérieur (2).

10. Installation de filtration suivant la revendication 8 ou 9, caractérisée par le fait que la partie d'obturation est constituée par un tiroir (103) de préférence en forme de plaque, qui est monté mobile en translation dans un dispositif de maintien ou un guide sur le boîtier (23).
